# EUROPEAN PATENT APPLICATION

(11) **EP 3 461 067 A1**
(43) Date of publication of application: **27.03.2019**
(21) Application number: 17192414.5
(22) Date of filing: 21.09.2017
(51) Int. Cl.: H04L 12/28, H04W 4/00

(54) **SYSTEM, METHOD AND CONTROL DEVICE FOR A HOME APPLIANCE**

(71) Applicant: E.G.O. Elektro-Gerätebau GmbH, 75038 Oberderdingen (DE)
(72) Inventor: Manan, Jose Antonio, 08110 Montcada i Reixac (ES)
(74) Representative: Patentanwälte Ruff, Wilhelm, Beier, Dauster & Partner mbB

(57) **Abstract**

The invention relates to a control device for home appliances with an interface to communicate with an external network via a mobile device, and with a control unit being adapted to provide control functions for the home appliance. The control unit may have a microcontroller that is designed for a control function of the home appliance as well as for communication with BLE to the mobile device or to the external network. The invention further relates to a home appliance with such a control device, to a system with such a home appliance and to a method.

## Description

### Applicable field and prior art

The invention relates to a control device for a home appliance, to a home appliance with such a control device, to a system with such a home appliance, and to a corresponding method.

Home appliances, e.g. washing machines, dishwashers, or audio players, have been used for long times. However, it is standard at the moment that each home appliance has its own control scheme, i.e. a user has to learn how to control each home appliance separately. In addition, it is not possible to remote control a home appliance, as it has to be controlled using its own control elements. Furthermore, any interaction with other items is not possible because the type of inputs that can be generated using standard control elements is typically very limited.

### Object and solution

It is thus an object of the present invention to provide for a control device that allows increased functionality compared with solutions known in the prior art. It is a further object of the present invention to provide for a home appliance having such a control device, to provide for a system having such a home appliance, and to provide a corresponding method.

This is solved by a control device according to claim 1, a home appliance according to claim 9, a system according to claim 11 and a method according to claim 12. Advantageous and preferred configurations of the invention are the subject of the further claims and are explained in more detail below. In this case, some of the features are described only for the control device or only for the home appliance, the system or the corresponding method. However, regardless of this, they are intended to be able to apply by themselves for the control device and for the home appliance, the system and the corresponding method independently of one another. The wording of the claims is made the content of the description by means of express reference.

The invention relates to a control device for home appliances. The control device comprises a connection for connecting to a home appliance. The control device also comprises an interface being configured to communicate with an external device and/or with an external network, and a control unit. The communication can be via diverse standards. The control unit is configured to receive action information from the external device or from the external network via the interface. It is configured to then generate control commands for the home appliance depending on action information received, so the control commands can reflect the action information. The control unit can give the control commands to the home appliance and/or may receive information from the home appliance. This information received from the appliance may then be forwarded to the external device or to the external network via the interface. The control unit is also configured to receive not only action information from the external device or from the external network via the interface that may be used directly to control the appliance but any information. The control device is preferably an integral part in the home appliance.

With the control device according to the invention, functionality of home appliances can be greatly enhanced. Especially, the external device or the external network can be used for a remote control of home appliances and for enhanced connectivity of these appliances. For example, specific network devices for controlling the home appliance can be used. Also external devices like standard smart phones or similar mobile devices can be used for that purpose. Logic and functionality of such devices can be used, for example, to implement new functions like remote control, time control, increased intelligence or maintenance support.

Preferably, the communication between the control device and a standard smart phone, tablet computer or a similar mobile device is Bluetooth or, even better, BLE. This saves energy, especially where there is no need to bridge substantial distances between the home appliance and the mobile device.

According to an embodiment the external network is the internet. This allows using existing technology and a wide variety of control options. The internet may be connected to a cloud server. The external network can also be a LAN or WLAN network being connected to the internet, for example.

According to a preferred embodiment the mobile external device mentioned before itself may be connected with its own external interface via WLAN or 3G/4G to a respective router for this wireless communication. The router then again can directly be connected to the internet, which can be preferably a broad band connection that is not wireless. For example the router in a household for internet connectivity via a home network can be used. Via the internet there can be a connection to an external server or preferably a cloud that may specifically be set up for this purpose.

According to an enhancement, the control device is configured to communicate with a central server accessible via the external network, or preferably with a cloud, wherein the action information is received from the central server or from the cloud, and/or the information is forwarded from the control device to the central server or to the cloud. This provides for further increased functionality using the external server or the cloud.

This communication with a central server accessible via the external network or with a cloud is preferably via an external device as mentioned before. This has the advantage that a simple interface for communication such as Bluetooth or BLE may be used in the control device, alternatively WLAN may be used in the control device. A more sophisticated interface for communicating with the external network or with a cloud as WLAN for example may be used, which is generally incorporated in any mobile device as mentioned before. These mobile devices do have both interfaces built in as a standard, even in cheap versions, and are in very common use. This also may allow using the functionality of a mobile phone or further integration in a sophisticated smart home system.

The central server or the cloud is preferably configured to communicate with a plurality of control devices and/or to provide to the control device energy cost information as action information and/or to provide water quality information as action information and/or to provide advertisement information regarding the home appliance.

The information may especially comprise maintenance information which is forwarded from the control unit to the central server or to the cloud. This allows the control device to help a user in maintenance tasks.

The central server or in particular the cloud is preferably configured to evaluate the maintenance information and to provide maintenance advice to a user depending on the maintenance information to the control device. Thus, a manufacturer of a home appliance or of a control device may add a functionality that may, for example, make maintenance easier and more effective for a user and may even generate additional revenues.

According to an embodiment, the home appliance is a washing machine. This is a typical home appliance for which the advantages provided by the control device according to the invention may significantly increase functionality.

The control device may especially be configured to determine types of clothes loaded into the washing machine and to generate the control commands depending on the types of clothes. This allows to automatically select a suitable program or other machine parameters in order to optimize the result of a washing process or to save costs.

Preferably, the control device may be configured to receive speech commands and to generate the control commands depending on the speech commands. This allows for controlling the home appliance fully or partially by speech, which can be faster and can especially help disabled persons. The control device may also be configured to produce speech output depending on the information received. This allows for a spoken feedback regarding the status of the home appliance.

The invention relates further to a home appliance with a control device as described before according to the invention. With regard to the control device, all embodiments and variations as disclosed herein can be applied. The advantages disclosed above can be achieved with such a home appliance.

The home appliance may further comprise a control chip or a microcontroller component, respectively, configured to both send and receive commands as well as control the home appliance. This may add further functionality.

The invention relates further to a system with at least one home appliance according to the invention. With regard to the home appliance, all embodiments and variations as disclosed herein can be applied. Such a system may also include further components, e.g. user input devices or gateways to other systems or networks. It may especially comprise a plurality of home appliances according to the invention.

The invention relates further to a method of controlling a home appliance, the method comprising the following steps receiving action information from an external network, generating control commands for the home appliance depending on the action information, and sending or giving the control commands to the home appliance. With this method, advantages similar to those already discussed above may be achieved. Especially, a home appliance may be controlled in a more sophisticated way.

The method may further comprise the steps of receiving information from the home appliance, and forwarding this information to the external network. This allows also monitoring a home appliance or helping with its maintenance. It also allows for statistical evaluation of home appliances and/or user habits. This information may be some kind of status information of the home appliance.

According to a preferred embodiment, the method is simultaneously used for controlling or monitoring a plurality of home appliances. This allows integration of several home appliances of the same type and/or of different types.

According to a further enhancement, the method further comprises the steps of receiving speech commands, and generating the control commands depending on the speech commands. This allows for voice control with the advantages already discussed above.

Preferably the method further comprises collecting data of a plurality of home appliances in a region, more preferably 50 to 500. This allows for connecting such a plurality of home appliances to a network. For example, maintenance or supply with auxiliary products may be coordinated for a plurality of home appliances, e.g. in a certain region. The home appliances may be of the same type or of different types.

According to a further embodiment, the home appliance is a washing machine. Such a washing machine can be controlled with the method according to the invention, wherein significant advantages can be achieved. Possible functions for such a washing machine are discussed in the following.

Preferably, the method may comprise at least one of the following steps:
- choosing activating times of the appliance depending on energy costs,
- selecting a washing temperature depending on detergent characteristics,
- dosing a softener depending on characteristics of the softener,
- dosing a softening agent depending on characteristics of the softening agent or depending on water data in the location of the appliance,
- determining characteristics of clothes and choosing, depending on the characteristics of clothes, program, temperature and/or spin,
- choosing a rinsing cycle depending on water hardness, and/or
- scheduling a cycle depending on weather conditions,

Especially, the control commands may be generated depending on results of these steps.

The steps just mentioned with respect to a washing machine provide for significantly increased functionality, leading to a higher customer confidentiality, lower costs and/or possible additional revenues for manufacturers or distributors. For example, data collected while performing such steps can be used in order to provide a supply chain for customers.

In general, it should be noted that expectations towards connected home appliances are huge. Many persons believe in improved quality of life when connected home appliances help monitoring, controlling or organizing daily tasks. Moreover, connected home appliances can save resources and energy.

For example, the concepts disclosed herein can be applied for washing machines, fridges, freezers, dishwashers and dryers. With such home appliances, additional functionality can be achieved. However, also other appliances like coffee machines, baking ovens and cooking hobs can in general be used in connection with the concepts disclosed herein.

Such mass workhorse products can be supplied with additional functionality without adding significant amounts of cost.

For the end user, increased comfort can be achieved. For example, additional features, programming capabilities, written or spoken expert tips, voice control, voice feedback or online shopping of detergents and textiles can be implemented. For example, in the case of a washing machine, washing profiles can be auto-adjusted versus selected products. There can also be given dosage recommendations and product recommendations versus water quality, for example regarding softness and/or detergents. In textile care, washing profile automation selection versus load type can be made automatically. There can be made recommendations for textile mix and automatic temperature adjustment. This can even be done automatically based on water data or the data of water hardness, which can be provided by the appliance itself after internal measurement, or which can be retrieved from officially available databases, for example provided by the water supply companies. This is a way to simplify and especially improve the dosage of detergent, softener and softening agents.

Energy efficiency can be improved by smart energy management. For example, washing scheduling recommendations can depend on energy hourly rate or weather forecast when warm weather and sunshine can be used to dry the laundry. For this, the weather forecast can be requested by the cloud and saved. There can also be given previewed cost per cycle or monthly energy cost reports.

With regard to guarantee, there can be supplied a fast online service and a predictive maintenance.

On the side of the product manufacturer, there can especially be provided more service. For example, online customer service, remote troubleshooting, predictive maintenance, product lifetime information, geo-localization and automatic testing can be supplied. There can also be various new options for marketing. For example, an in-time new appliance advertisement, in-time OEM product advertisement, direct information of appliance usage, direct information of product preference, online sales, product geo-preferences and direct quality feedback can be used.

In general, no wire connection is needed, even if a wire-based connection can be used. Wireless control can be used, as is already standard in many households. Component identification may avoid disassembling issues. There can also be implemented an upgrading service, which can, for example, include wireless software update and wireless machine test.

For a component supplier, the concepts disclosed herein offer the possibility to provide new functionalities to OEM manufacturers.

The costs that are to be expected with the concepts herein are generally quite low, as components can be developed for a high number of products and prices for each component are generally low. For example, adding a Bluetooth functionality to a device incurs a cost of approximately 1 Euro only. Alternatively, a microcontroller component as mentioned before may be used that can control the appliance and has the interface for a communication with the external device or with the external network integrated.

End users can, for example, be provided with applications running on computers or mobile phones that can implement the functionality. For example, standard computers or mobile phones can be used in order to control home appliances with regard to the functionalities discussed herein.

These and further features are evident not only from the claims but also from the description and the drawing, the individual features each being implemented by themselves or in multiples in the form of subcombinations for an embodiment of the invention and in different fields and being able to be advantageous and independent protectable embodiments for which protection is claimed here. The division of the application into individual sections and subheadings does not limit the general validity of the statements made thereunder.

### Brief description of the drawing

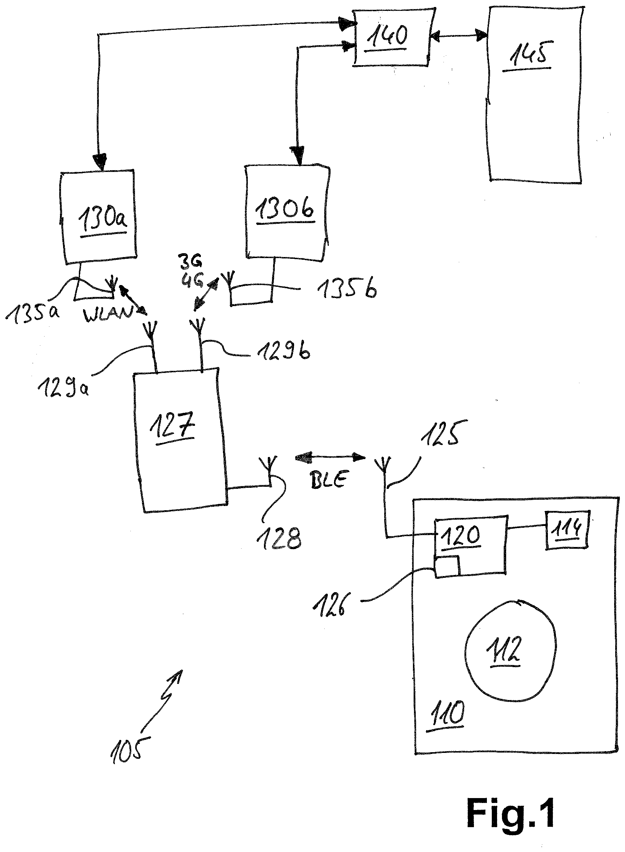

Further details and advantages will be apparent from the following description of an embodiment that is given with reference to the enclosed drawing in Fig. 1 showing a system according to the invention.

### Detailed description of the embodiment

Fig. 1 shows a system 105 according to a possible embodiment of the invention. It is also only shown schematically. The system 105 comprises a home appliance in the form of a washing machine 110 with a drum 112 as described before. The washing machine 110 further comprises a control panel 114 being adapted to input control commands in order to control its functionality via a control unit 126. The washing machine 110 also comprises a control device 120 being adapted to control operation of the washing machine 110. The control device may be located on the same PCB as the control panel or the electronics of the control panel 114.

The control device 120 is also adapted to directly communicate in a wireless way, in this case via Bluetooth or BLE with an antenna 125 as the interface mentioned before. The control unit 126 is again adapted to receive information from components of the washing machine 110 and to forward such information. The control unit 126 is a very special microcontroller part being adapted to fulfill the two tasks mentioned above, to control and to communicate in one single body. This enhances its effectiveness and lessens the space needed for electronic parts. One example of such a control unit is the CYBL10X6X family of Cypress Semiconductor Co.. The control unit may have antenna 125 integrated, or it may be provided externally.

Furthermore, the system 105 comprises a mobile device such as a smartphone 127 of a user to be using the washing machine. Alternatively, it can be a tablet computer with wireless connectivity. The mobile device 127 is on the one hand adapted to communicate with the control device 120 and its antenna 125 via BLE. On the other hand it is adapted to either communicate with WLAN via its WLAN antenna 129a with a WLAN antenna 135a of a WLAN router 130a. This could be the WLAN router of a household being connected to the Internet 140 via cable, and via the Internet 140 to an external Cloud 145. Router 130a may be a standard household WLAN router providing a standard wireless network.

As an alternative, smartphone 127 as a mobile device may communicate via 3G or 4G standard mobile with an antenna 129b. It may connect to a mobile network 130b having an antenna 135b. The mobile network 130b is also connected to the Internet 140 and to the external Cloud 145.

In this way, it is possible to use one's own smartphone 127 or respective mobile device, which can be coupled to the washing machine 110. This smartphone 127 usually is also connected to the Internet 140 anyway, in either of the two ways described before.

In addition to controlling the washing machine 110 or to retrieving data from it for personal use in the smartphone 127, it is also possible to route data from the washing machine 110 to the external Cloud 145 and vice versa. This may be effected consciously by the user, or automatically in regular intervals started by the smartphone 127 or started by a special App on it.

A system as disclosed herein may, for example, be named ORBIT. ORBIT may be a concept which allows any appliance manufacturer to enter in an easy and cost effective way into the Internet of Things (IoT) world.

Although there is a real tendency to apply connectivity on the appliance world, there is presently no real demand at the end user. The appliance buyer is usually more interested on the appliance capacity to develop properly its job, the design, and the energy constraints.

Another important fact is that a connected home is not a reality today; it will take time to arrive to the situation where a home connectivity will be majoritarian established at the market. Even when this will happen, the industry is far from a standard communication protocol to be applied globally.

On the other hand, some manufacturers are trying to differentiate a product by special features as the connectivity. They push the connected product to the high segment, where the addition of the connectivity cost does not suppose a stopper on the end customer buying decision.

A specific cloud with related services as method enter in the market to cover this important gap, the idea is to provide connectivity to the low and medium segment of home appliances without adding significant cost, providing several added values to the end users, and to the appliance manufacturers as well.

The advantages of this connectivity concept can be appreciated without the need on a global connectivity at home, so the home appliance according to the invention may be the only appliance has connectivity to the internet or to a cloud, respectively. This may be an added value for the user and the manufacturer at the first moment to use the appliance. Anyhow, the same concept is valid for high segment washing machines or home appliances where the connectivity is provided in a more powerful physical layer, for example by providing the appliance with several microcontroller components, or using a home connectivity network.

Some appliance manufacturers are waiting on, thinking to jump in this technology when some other will do it. Well-known companies are in best position to lead this change from the market point of view, but for the moment they are reserving the connectivity to the higher segment as explained, slowing the introduction of this "not demanded" technology.

This situation brings a very good opportunity for the medium size companies to grow fast, especially if connectivity is accomplished in a way as described here.

In summary, the cloud and the method might be an loT concept for the appliance world, dimensioned to cover its necessities without adding costs. This is mainly due to the use of an external device such as a mobile device, especially a mobile phone or a tablet.

Even when the marketing and publicity is pushing the sector of home appliances to use connectivity, there is currently no real demand on the end user. This fact can be proven at any shop: the buyer is interested on how big is the drum of the washing machine, or the volume of the microwave oven, or the services a dishwasher can manage. The cost and the brand are still a decision to buy a given appliance; the ability for an appliance to be connected to the internet is not appreciated at all by the user.

If a manufacturer wants to differentiate his product by means of connectivity, he must create a need. Creating the need means to offer more value than the cost a customer is willing to pay, which in this case is very close to zero. On the other hand, if the added value is much bigger than the cost added, the tendency will be clearly to buy the product.

The use cases are very important on the definition for the value. In the following, some of them will be discussed.

As indicated, the design of the appliance takes an important role on the choice of the buyer. An elegant line and discrete user interface or display, respectively, is appreciated as a trending design. The invention with the home appliance allows to the appliance manufacturer to save costs and effort on the user interface by transferring this functionality at least partly to a cellular phone or tablet. So a home appliance may have a reduced interface or display with reduced operating elements if some of these functions are provided in the external device. A home appliance in one embodiment may even have no proprietary operating elements with the exception of a power button and even no display at all.

Appliances can be integrated more easily into the kitchen furniture design. Normally, a minimum interface or a power button has to remain in the appliance, which can be a small display or indicator.

Additional features commonly included on higher segment home appliances such as washing machines can be provided. Even when the appliance user interface is thought for a simple usage, the App present at the mobile device can contain several additional functions as more programs, more options, time delay or time programming capabilities.

The user interface commonly accepted for smartphones can be the way to operate the appliance, even when this appliance is at the low or medium market segment, so user quality feeling is improved without adding any cost or effort or complexity.

Combined control or supervision of different appliances is also possible. It may be provided in a method according to the invention to start giving a user the option to select the possibility to sequence two different appliances in starting time for energy management, to the result usage of one process to influence the other one. For example, the information of the wash cycle in a washing machine can be used to properly program a dryer, since these two appliances are commonly acquired together. They are also used together, and via the new communication method it may be known in a cloud that these two appliances are in the same household and even in the same place. This allows for specific functions to be provided in the controls of both appliances, which again can be effected from the cloud via an external device and the interfaces in the control devices of the appliances.

The use of the appliance is commonly learning by generating know how transfer, no precise appliance usage is learnt by a common user. This can hide a lot of benefits since the manual instructions are often disregarded. The possibility to write or speak out an instruction manual, or to give advice from a portable external device, can be a good solution. This also saves paper used on an instruction manual, which can be reduced by a method and a system of the invention to a QR code that automatically sets up the home appliance when it is installed with the help of an external device connected to the internet or the cloud, respectively.

Some brand new added values on appliance user interface functions can be added for free. This is the case with the voice control, for example. The use of the computational power on the portable devices allows to decode voice into the orders to change the program, the temperature, time or options, for example. This is especially interesting for disabled persons which either cannot move or see the appliance indicators. A microphone is present in almost any modern mobile device as mentioned before.

The opposite is obviously possible also, so the home appliance can reply the selected program, time or option using the external device as high quality speaker performing voice feedback.

Online shopping is also a good argument for end user comfort. Purchasing heavy detergents, softeners, softening agent and salt is always annoying. Additionally this need is often only realized when a pot or bottle is empty. Similar thing happens when some missing ingredient for a recipe is needed. The connectivity permits the user to buy online, allowing a previously selected supermarket to bring this heavy stuff to the user's home.

The ability of the system of the invention to be connected to more than one external device allows for managing or monitoring one single home appliance or more home appliances from far away. Although there are several ways to do this, the cost effective one is to use a close external device as a bridge between internet and the home appliance. This is the case of an elder or 'non user' assistance. A remote user with a mobile phone as an external device is able to set-up a program assisting an inexperienced user through their own smart phone or tablet.

The use of additives in appliances like washing machines is common. In a washing machine the detergent, the softening agent and the softener are common laundry protagonists, in dish care salt and rinse aid are used, in cooking appliances food additives as pepper, salt, oil, herbs, fruits are used as side ingredients for different recipes. The invention allows for supervision of these goods needed for various tasks. It can be detected by the system and in a method according to the invention whether an additive, in particular detergent, salt, softening agent or softener or the like, is soon to run out by monitoring the number of washing cycles performed or other user activity and also taking into account the parameters of each of these previous washing cycles or other user activities, wherein this information has for each user activity been sent to the cloud by the control device. This information is then used in the cloud to calculate or to estimate an end of a supply of this additive in the appliance, preferably also when this will occur. A respective information may then be given and/or displayed to a user to get a fresh supply of any of these additives. Alternatively, if such an option is agreed to by the user, a new supply of this additive is ordered online with any predefined shop or a preferred shop of the cloud manager, and then also shipped automatically to the user of the appliance.

The invention also can automatically change the program or the profile of a given appliance depending on the additive used. For example, on a washing machine, the specifics or the activation temperature of a known detergent is taken into consideration in the cloud to modify or to select a given washing program in the washing appliance, in particular to select a better temperature for the washing process than the user has. This means that the user command may be overruled by the control device. In a recipe in a cooking appliance, the use of some additives or side ingredients can modify the cooking time (or power) to preserve the flavour of the dish, so a timing can be set accordingly and automatically. The system of the invention may give appropriate commands to the appliance for best results depending on the selected products.

Dosage is often also a problem, depending on the load, the type of clothes in a washing machine and the product used. Dosage recommendation is also a feature obtained automatically from the connectivity. Knowing the product to be dosed, for example softener or detergent, the load and the program, a dosage selection can be made in the cloud based on this information that again has been provided by the control device. The control device can then either give this information to a user to make use of it when dosing manually, or a dosing is done automatically by the appliance without any interference by a user. This information need not exactly be present in the control device built into the appliance, but can be provided and updated in the cloud as described before, especially by taking into account user experience fed back.

In cooking appliances this feature opens the possibility to automatically follow a recipe, or to assist the user to do it by outputting information to the user. In addition to this, the invention opens up a way to have dosage automated, at least of softener agent, potentially also of softener or detergent, for example depending of a washing program that a user has selected.

Water is used in many home processes. The quality of water is often disregarded or neglected and has a big impact on the results, especially in washing machines or dishwashers, but also affects cooking results. Geo-localization may provide the knowledge of the local water quality, especially water hardness and potentially contaminations, opening the possibility to automatically compensate this. In a washing machine or in a dishwasher, information on water hardness may then be provided from the cloud to the appliance or to its control device, respectively. This information is then used by the control device to use different softeners or to make a more appropriate dosage of softener. In a dishwashing appliance a warning for the need of a water softener or a higher salt application may be outputted. Information on water hardness may also be provided to the home appliance to better adapt a rinsing cycle, so that based on the information provided the home appliance can for example provide for a more intense rinsing cycle or for a higher number of rinsing cycles. Alternatively, if the actual water hardness allows for a shorter rinsing cycle, the process of rinsing can be stopped earlier and water and energy can be saved.

Textile care in laundry processes is a general appreciated value; the best treatment for favorite clothes is normally a demanded function. A virtual wardrobe may give the home appliance the knowledge of which garment is in the washing machine or in the dryer. A set of selected clothes can be stored in a virtual wardrobe in the control device or in a special App on the external mobile device. The user can give this information to the washing machine or dryer by virtually dropping the garment into the appliance when it is going to be washed or dried, preferably also doing this on the App mentioned before. This information is then sent to the cloud, and the best parameters for treating this garment are worked out, possibly based on many user experiences or general information. This information is then sent back via the external device and the interface to the appliance control device to automatically adjust a treating program, preferably with regard to agitation, temperature, amount of water and spin. The analogy for cooking appliances may be a virtual storeroom where the main ingredients for a recipe can be stored to be processed in order to perform a dish.

Using the same concept, the system can warn for mix on textiles in washing (colors or textile materials), which information can be outputted by the external device or by the appliance to a user and can even stop the appliance from starting. In a similar way, a mix of opposite tastes when cooking can be avoided, which information may be combined and analyzed in the cloud and then be sent back to the appliance.

An external device can reprogram a washing machine when the garment information is known, this can be accomplished by somehow introducing these data into the washing machine. The programming can be full automatic by a QR Code or even by image recognition, wherein the external device is used to read a QR Code or perform the image recognition. The external will then send the data to the cloud, will receive appropriate information about the reprogramming to give this in turn to the control device of the appliance where the reprogramming is started.

In the same way, it is possible to establish time and power to cook 'al dente' pasta or pizza in a baking oven.

Energy management is one of the main topics when connectivity is discussed. Usually, this is linked with home connectivity nets, but the solution of the invention does not need any infrastructure to let the user enjoy the savings and advantages.

Nowadays all energy companies are relocating the energy cost as function of the time. In some countries this is done on a fixed hourly scheduling, while in others they fix every day a different time frame for energy hourly rates. It may be permitted to program easily the appliance to work on the less expensive time frame, saving cost to the user.

The use of the weather forecast in the cloud permits the delay or the recommendation to end the washing or a separate drying process when good weather is forecast, making it possible to dry laundry using the sun. The same way, maximum power output from solar panels can be predicted, recommending the use of a given appliance when more energy is provided by a home energy station.

Smart scheduling of a process is given easily. The idea behind is to cut or delay processes (e.g. wash, dry, dish care or bake) depending on It may be several variables. For example, it is possible to schedule the washing machine to a given hour, while it is automatically rescheduled by the system or the cloud, respectively, to have the less global cost, considering the weather and the hourly energy cost. For example, one can program the washing machine at 8:00 in the morning, to have the laundry just done at 18:00 using the minimum cost. This information about a starting time preferred by a user is then given to the cloud via an external device. In the cloud, as mentioned before, all information available is taken into account, which may include not only general information about energy cost or weather condition, but also information on experience about this specific appliance and user, consequently. The best hour to do the washing part of the cycle may be selected in the cloud (the less expensive), and this information may again be given to the washing machine to be implemented, while the spin process will be starting rather exactly at 17:30 to be finished just before the user is arriving home. This starting of the spin process may in particular also be varied depending on information about the actual garment load, which can be provided as described before. This is an example of how several options are available to better control an appliance to achieve a desired result by using information in the cloud.

It is important to understand that the cloud service does not need a fully connected home to do this combined control. A smart phone or other external device with the same functionality is enough to perform these functions. On the other hand, a central control can be installed to cover all appliance management from one fixed position, being an option to upgrade the complete concept of the invention.

The 'use of appliance' cost can be monitored and displayed; even a monthly report can be extracted, where the system with the cloud can recommend actions to reduce the bill.

Appliance setup can be established at the connection time giving the guaranty and customer contracts. This leaves the user to be in direct contact with the service with all the benefits this can represent.

The mobile application sets up the installation and checks the environmental conditions to readjust possible user parameters. This is done by an auto test performed from the mobile device; this auto-test represents a service diagnostic each time the end user wants to check the home appliance for any error or miss function, letting the user to solve simple problems that otherwise will represent a service intervention commonly provoked by a bad product installation, causing cost and frustration on the user side.

The service button is a similar concept to the online shopping already explained. In this case, it links the user with the service, so it knows if the user has a problem, and can act proactively to solve the issue. No more calls to a service center are needed. Instead, the manufacturer or service company can call the user, or leave messages in the phone getting in touch with the end customer.

The invention may help to let the user maintain the appliance in positive light.

A predictive maintenance can be applied, simple tips as cleaning filters, or add additives can be advertised regularly.

Typical B2B companies do not have access to the user. The typical customer is the appliance manufacturer. The invention may provide a tool to reinforce the customer relationship, turning into a real partnership. Therefore, a system according to the invention may be more than a simple control feature, it is a complete 360° service.

The invention may give access to all the connected appliances in the market, allowing online internet end customer service. Any service demand or field incidence from the appliance may be displayed at a dashboard service panel, leaving a corresponding service center to act proactively to solve it with minimum cost.

The service dashboard also permits remote troubleshooting for common issues avoiding a service intervention in most cases, making the service cost to be reduced. The real data information can be read telemetrically by a service center located in any country.

Product lifecycle may be monitored, data of the complete life of the appliance may be available. Temperature, selected program, options, unbalance & max spin reached (in case of washing machines), drying time, maintenance data, autocleaning cycles (for ovens), record of errors and warnings, etc., are available as data, for example.

The received data allows a predictive maintenance as well, since the stress of the appliance can be calculated.

The geographical information is a powerful tool to understand troubles and home appliance behavior. This data crossed with environmental data can conclude the reasons for failure and risk assessment.

The direct end customer contact gives more opportunities in the marketing field.
a) Direct and "in time" advertisement can be accomplished by crossing the lifetime information. Advertisement can be done using the media provided by the mobile app software or by any other media system.
b) Savings in product design can be achieved by the updated information on customer habits provided by the system of the invention, since the product can be modified adapting it to the real usage of the home appliance.
c) Product preferences are also available geographically, so marketing campaigns can be direct and more effective.
d) Online sales can cut commercial costs offering the possibility to acquire new appliances via the internet.
e) Having the customer at the other end of the cord, a direct quality feedback is obtained.

Wireless communication is a new challenge on production and quality fields. The inside machine component traceability becomes possible without intervention of the machine or home appliance, respectively. This reduces the scrap generated by manipulation and allows to know remotely what problem can be present in a machine or home appliance, respectively. The invention may provide the information for the electronic components connected to the main control, but moreover, it can also contain the information for the non-electronic components of the home appliance, respectively if the production line gives such information. Any change on any part can then be monitored.

At the moment, it is usual to test the appliance in the production line by an intrusive communication bus, which forces to have a physical port. The wireless condition permits to load the software or the variant, and starts the test sequence with the appliance completely assembled. It is even possible to do a variant loading while the appliance is in movement, shorting the test cycle which is one of the bottlenecks in appliance production plants.

A complete cloud can be achieved by the simple addition to the connectivity in the main appliance control. The added cost on the main board is covering all the services the customers can enjoy.

The cloud consists of a connection of the end users on one side, using the new advantages this technology provides as:
a) Comfort,
b) special features,
c) energy savings, and
d) service excellence.

At the other side, manufacturers are experiencing
1) Lower service costs,
2) free publicity,
3) direct marketing, and
4) online shopping.

For the cost of the connectable control, a full package can be provided:
- Different appliance connectable controls
- Full Mobile APP, e.g. in Android and iOs, with scalable configuration and full customizable aesthetical design
- Data collection system
- Data storage
- Data availability

The manufacturer acquiring this system will be able to monitor when and where the home appliances are sold, from the production, to the home installation date. Th invention may permit, then, to monitor all the cycle results of all home appliances and to perform any proactive action.

## Claims

1. Control device (120) for a home appliance (110), the control device (120) comprising
- an interface (125) being configured to communicate with an external device (127) or with an external network (140, 145),
- a connection for connecting to the home appliance (110) and
- a control unit (126) being configured
- to receive action information from the external device (127) or from the external network (140, 145) via the interface (125),
- to generate control commands for the home appliance (110) depending on the action information received, and
- to give the control commands to the home appliance (110), and/or
- to receive information from the home appliance (110) and to forward the information to the external device (127) or to the external network (140, 145) via the interface (125), and/or
- to receive information the external device (127) or from the external network (140, 145) via the interface (125).

2. Control device (120) according to claim 1, **characterized in that** the external network (140) is the internet, in particular the internet being provided with a cloud server (145).

3. Control device (120) according to claim 1 or 2, **characterized in that** the control device (120) is configured to communicate with a central server or with a cloud (145) accessible via the external network (140), wherein
- the action information is received from the cloud (145), and/or
- the information is forwarded to the cloud (145),
wherein preferably the cloud (145) is configured to communicate with a plurality of control devices (120) and/or to provide to the control device (120) energy cost information as action information and/or to provide water quality information as action information and/or to provide advertisement information regarding the home appliance (110).

4. Control device (120) according to one of the preceding claims, **characterized in that** the control device (120) is configured to communicate with a central server or with a cloud (145), that is accessible via the external network (140) or via an external device (127), the external device preferably being a mobile phone or a tablet.

5. Control device (120) according to claim 3 or 4, **characterized in that** the information comprises maintenance information which is forwarded by the control unit (126) to the cloud (145), wherein preferably the cloud (145) is configured to evaluate the maintenance information and to provide maintenance advice depending on the maintenance information to the control device (120).

6. Control device (120) according to one of the preceding claims, **characterized in that** the home appliance (110) is a washing machine, wherein preferably the control device (120) is configured to determine types of clothes loaded into the washing machine and to generate the control commands depending on the types of clothes.

7. Control device (120) according to one of the preceding claims, **characterized in that** the control device (120) is configured to receive speech commands and to generate the control commands depending on the speech commands, and/or the control device (120) is configured to produce speech output depending on the information.

8. Control device (120) according to one of the preceding claims, **characterized in that** the control unit (126) is designed to control the home appliance (110) and to communicate with an external device (127) and/or with external router or network (140, 145), wherein preferably the control unit (126) is a single microcontroller component with both functionalities incorporated, wherein in particular it is designed to communicate via BLE with the external device (127).

9. Home appliance (110) with a control device (120) according to one of claims 1 to 8.

10. Home appliance (110) according to claim 9, further comprising a microcontroller component configured to both send and receive commands as well as control the home appliance (110), wherein preferably this microcontroller component is the control unit (126) as a single microcontroller component with both functionalities of sending and receiving information and commands as well as controlling the home appliance (110) incorporated therein, wherein the microcontroller component is designed to communicate via BLE with the external device (127) or with the external network (140, 145).

11. System (105) with at least one home appliance (110) according to claim 9 or 10, wherein preferably the system is provided with an external device (127) as an external interface (129a, 129b), the external device being configured to communicate with the control device (120) via an interface (125), in particular as BLE, and to communicate with an external network (140, 145) via the external interface (129a, 129b) and via a WLAN router (130a, 130b) having its own interface (135a, 135b).

12. Method of controlling a home appliance (110), the method comprising the following steps:
- receiving action information from an external an external device (127) or from a network (140, 145),
- generating control commands for the home appliance (110) depending on the action information, and
- giving the control commands to the home appliance (110),
and/or
- receiving information from the home appliance (110), and
- forwarding the information to the external device (127) or to the external network (140, 145).

13. Method according to claim 12, **characterized in that** the method is simultaneously used for controlling a plurality of home appliances (110) and/or that the method further comprises collecting data of a plurality of home appliances (110) in a region, preferably 50 to 500.

14. Method according to claim 12 or 13, **characterized in that** the method further is performed with a home appliance (110) according to claim 9 or 10.

15. Method according to one of claims 12 to 14, **characterized in that**
- the home appliance (110) is a washing machine,
- the method comprises at least one of the following steps:
- choosing activating times depending on energy costs,
- selecting a washing temperature depending on detergent characteristics,
- dosing a softener depending on characteristics of the softener,
- dosing a softening agent depending on characteristics of the softening agent or depending on water data in the location of the appliance,
- determining characteristics of clothes and choosing, depending on the characteristics of clothes, program, temperature and/or spin,
- choosing a rinsing cycle depending on water hardness, and/or
- scheduling a cycle depending on weather conditions,
- wherein the control commands are generated depending on results of these steps.
